**Europäisches Patentamt**

**European Patent Office**

**Office européen des brevets**

(19)

(11) Publication number : **0 349 268 B1**

(12)

# EUROPEAN PATENT SPECIFICATION

(45) Date of publication of patent specification :
02.09.92 Bulletin 92/36

(51) Int. Cl.⁵ : **B23Q 5/04**

(21) Application number : **89306513.6**

(22) Date of filing : **27.06.89**

(54) **Speed-up spindle unit.**

(30) Priority : **28.06.88 JP 160336/88**

(43) Date of publication of application :
**03.01.90 Bulletin 90/01**

(45) Publication of the grant of the patent :
**02.09.92 Bulletin 92/36**

(84) Designated Contracting States :
**CH DE FR GB IT LI**

(56) References cited :
CH-A- 284 519
DE-A- 3 403 360
FR-A- 1 163 949
GB-A- 191 537

(73) Proprietor : **SHOWA SEIKI KABUSHIKI KAISHA**
**7-18 Imazaikecho**
**Toyonakashi Osaka (JP)**
Proprietor : **KOYO SEIKO CO., LTD.**
**5-8, 3-chome, Minamisenba**
**Chuo-ku Osaka (JP)**

(72) Inventor : **Katayama, Eiichi**
**144-58 Amamihigashi 2**
**Matsubarashi Osaka (JP)**

(74) Representative : **Purvis, William Michael Cameron et al**
**D. Young & Co. 10 Staple Inn**
**London WC1V 7RD (GB)**

EP 0 349 268 B1

Jouve, 18, rue Saint-Denis, 75001 PARIS

## Description

The invention relates to a speed-up spindle unit for connection to a machine tool.

Such a speed-up spindle unit can be used for example for rotating a small diameter cutting tool at high speeds.

Various kinds of speed-up spindle units have been previously proposed. For instance, GB-B-191,537, DE-A-3,403,360 and CH-A-284519 each have a planetary gear mechanism connected between an input shaft connected to the main shaft of the machine, and a high speed spindle (an output shaft) having a chuck attached to its forward end. The planetary gear mechanism increases the speed of rotation of the input shaft so that the high speed spindle rotates at high speeds. The planetary gears driving the spindle comprise toothed gears.

FR-A-1,163,949 discloses a motor driven spindle driven by planetary gearing system. The planetary gears comprise either ball bearings or rollers urged against the spindle by compression springs.

FR-A-1163949 also mentions that the speed-up spindle unit is for connection to a machine tool. The unit comprises:

a cylindrical housing having means to prevent the housing from rotating relative to a machine driving the tool;

a cylindrical carrier having a central bore extending in the axial direction from a forward end towards a rear end and connected to an input shaft at its rear end;

a high speed spindle connected to a tool holder at its forward end and to a sun roller at its rear end;

a plurality of radial passageways arranged circumferentially in the carrier so that they communicate with the central bore; and

planetary rollers rotatably carried in respective ones of the radial passageways in such a manner that each maintains contact with the fixed ring at one peripheral portion and with the sun roller at the opposite peripheral portion so that the planetary rollers individually rotate about their own axes while they revolve about the sun roller, thereby constituting a traction drive mechanism.

One of the disadvantages of speed-up spindle units having such planetary gear mechanisms are their relatively low rigidity which is likely to cause vibrations in the working tools. Another disadvantage is that their capacity for carrying loads is small.

According to the invention there is provided a speed-up spindle unit for connection to a machine tool and comprising:

a cylindrical housing having means to prevent the housing from rotating relative to a machine driving the tool;

a cylindrical carrier having a central, bore extending in the axial direction from a forward end toward a rear end and connected to an input shaft at its rear end;

a fixed ring fixed by an interference fit on the inner peripheral surface of the cylindrical housing so that the fixed ring is subject to a concentrical contraction and is positioned coaxially with the cylindrical carrier;

a high-speed spindle connected to a tool holder at its forward end and to a sun roller at its rearward end;

a plurality of radial passageways arranged circumferentially in the carrier so that they communicate with the central bore;

planetary rollers rotatably carried in respective ones of the radial passageways in such a manner as each maintains contact with the fixed ring at one peripheral portion and with the sun roller at the opposite peripheral portion so that the planetary rollers individually rotate about their own axes while they revolve about the sun roller, thereby constituting a traction drive mechanism whereby an increased speed output is obtained from the sun roller in response to an input to the carrier; and

a cooling jacket passageway disposed in the housing to remove from the fixed ring heat generated by friction.

Thus the speed-up spindle unit of the invention is distinguished over that disclosed in FR-A-1163949 by the inclusion of:

a fixed ring secured by means of an interference fit on the inner peripheral surface of the cylindrical housing so that the fixed ring is subject to a concentric contraction and is positioned coaxially with the cylindrical carrier; and

a cooling jacket passageway disposed in the housing to remove from the fixed ring heat generated by friction forces.

Such a speed-up spindle unit can have a very rigid structure and good stability in transmitting torque.

The cooling jacket passageway is preferably connected to an outlet port which is open toward the tool holder so that the discharged coolant can cool the tool and lubricate it while the tool is in operation. preferably the fixed ring is provided with a ring-shaped groove to store a lubricant.

Thus, when the carrier is connected to the main shaft of a machine tool and is rotated, the planetary rollers individually rotate about their own axes while they revolve about the sun roller. Because of the firm contact between the planetary roller and the sun roller, a torque is exerted on the sun roller at each contact point therebetween. Lubricant films covering the contact points protect the sun roller and the planetary rollers against seizure. The cooling jacket passageway prevents undue temperature rise which could be caused by the rotation of the high speed spindle.

The invention is diagrammatically illustrated by way of example in the accompanying drawings, in which:-

Figure 1 is a cross-sectional front view showing an embodiment of a speed-up spindle unit according to the invention; and

Figure 2 is a cross-section taken on line 2-2 in Figure 1.

While a speed-up spindle unit according to the invention can be employed for various uses, in the illustrated embodiment the unit is applied to an automatic tool changer (ATC).

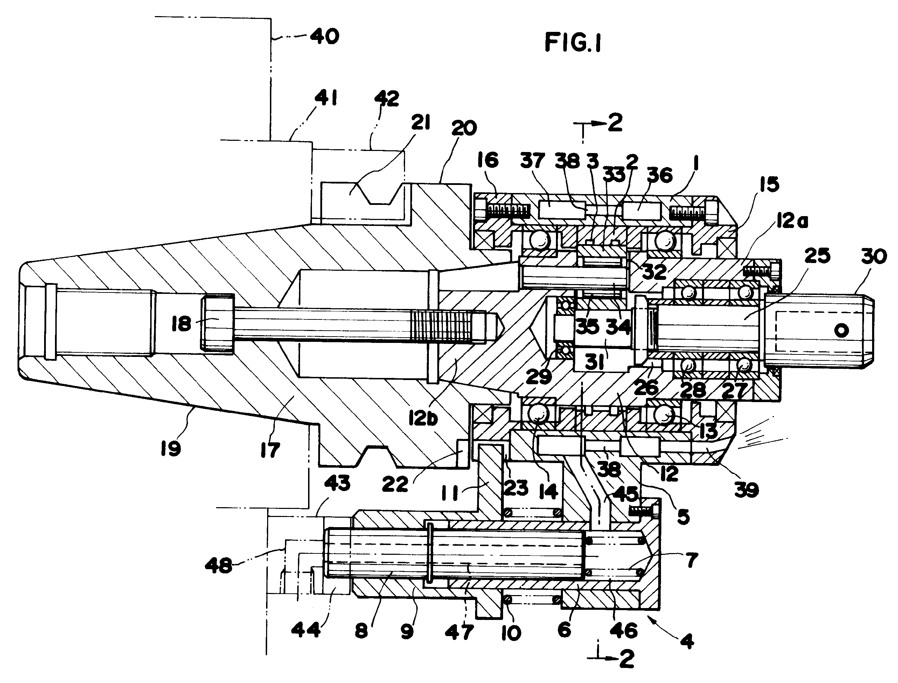

Referring to Figure 1, a cylindrical housing 1 has a fixed ring 2 on a middle portion of its inner periphery, the fixed ring 2 having an annular groove 3 for storing a lubricant on its inner peripheral surface.

The housing 1 is provided with a stop unit 4 for preventing the housing 1 from rotating with respect to a machine 40. The stop unit 4 includes an arm 5 radially projecting through the housing 1, a guide sleeve 6 secured to the arm 5 in parallel with the central axis of the housing 1, a stop pin 8 slidably mounted in the sleeve 6 in such a manner as to be normally biased outward by a first spring 7, and a slidable cylinder 9 housing the stop pin 8, the slidable cylinder 9 being also biased outward by a second spring 10. The slidable cylinder 9 has a radially projecting engager 11 at its rearward end, which is designed to position an input shaft 17 at an exact position with respect to the housing 1 as will be described below.

There is provided a cylindrical carrier 12 disposed concentrically of the fixed ring 2 of the housing 1. The cylindrical carrier 12 is rotatably supported through ball bearings 13 and 14. The carrier 12 has a forward end 12a and a rearward end 12b which respectively project through covers 15 and 16, which cover the respective ends of the housing 1. The input shaft 17 has a tapered shank portion 19 and is fixed to the rearward end 12b of the carrier 12 by means of a bolt 18.

The input shaft 17 has a flange 20 at its forward end with which a holding arm of the automatic tool changer is engaged. The flange 20 has a key groove 21 in its periphery to receive a drive key 42 of a main shaft 41 of the machine 40, and another key groove 22 engageable with the engager 11. Normally the engager 11 fits in the key groove 22 whereby the input shaft 17 is positioned appropriately against the housing 1. The cover 16 has a recess 23 opposite the groove 22. When the main shaft 41 of the machine 40 and the tapered shank 19 of the input shaft 17 are joined as shown in Figure 1, the stop pin 8 fits in a recess 44 in a block 43 of the machine 40, thereby enabling the housing 1 to stay stationary against the machine 40. The slidable cylinder 9 comes into abutment with the forward end of the block 43, and moves toward the arm 5 against the force of the spring 10. The backward movement of the cylinder 9 causes the engager 11 thereof to separate from the groove 22 and engage in the recess 23. As a result, the input shaft 17 can rotate independently of the housing 1. The rotation of the main shaft 41 is transmitted to the carrier 12 through the input shaft 17.

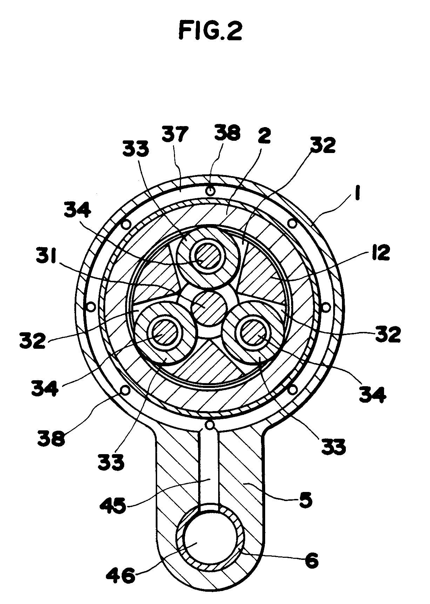

A high speed spindle 25 is rotatably carried in a bore 26 axially produced in the carrier 12 through ball bearings 27, 28 and 29. The balls used in the bearings 13, 14 and 27 to 29 can be made of steel or ceramics such as silicone-nitride base ceramics. Ceramic ball bearings are advantageous in that the rigidity for supporting the spindle is enhanced as compared with the conventional steel ball bearings, thereby preventing the housing 1 from becoming deformed under a load. This can lead to an increased capacity for carrying loads. Another advantage is that the ceramics balls prevent the lubricant film thereon from deteriorating owing to a temperature rise caused by friction. This is of particular advantage for the bearings 27 and 28 which rotate at a high speed. The use of ceramics is as useful as the employment of cooling jackets to prevent the lubricant from deteriorating owing to a temperature rise. In addition, the ceramic ball bearings are protected against seizure owing to a temperature rise resulting from the high speed rotation. The high speed spindle 25 is connected to a tool holder 30 at its forward end, and to a sun roller 31 at its rearward end. As can be seen in Figure 2, the carrier 12 has radial passageways 32 provided circumferentially at intervals; in the illustrated embodiment, at angular displacement of 120°. Planetary rollers 33 are rotatably accommodated in the radial passages 32.

The planetary rollers 33 accommodated in the respective radial passageways 32 maintain contact between the fixed ring 2 and the sun roller 31. In this way a traction drive mechanism is formed. The planetary rollers 33 are individually carried on pins 34 through needle roller bearings 35. Because of the frictional contact of the planetary rollers 33 with the ring 2 and the sun roller 31, a drive is transmitted to the sun roller 31 through the planetary rollers 33. The fixed ring 2 is an interference fit with respect to the housing 1, thereby subjecting the fixed ring 2 to a concentric contraction. This arrangement avoids variations in the fit of the planetary rollers 33.

The housing 1 is provided with cooling jacket passageways 36 and 37 at a forward side and at a rearward side, respectively, in which a coolant is circulated. The passageways 36 and 37 are connected to each other through bores 38 arranged in parallel at intervals. The passageway 36 is preferably connected to an outlet port 39 which is open at the front of the cover 15. The passageway 37 is connected to a space 46 in the guide sleeve 6 through a branch pass 45 and also to a space 47 in the stop pin 8. While the speed-up spindle unit is in use, the space 47 is brought into communication with a coolant supply port 48 provided in the block 43. Thus coolant is introduced into the annular passageway 37 through the spaces 47 and 46, and the branch pass 45, flows into the annular passageway 36 through the bores 38, and is discharged through the outlet port 39. The discharged coolant cools the tool (not shown) held in the tool holder 30 in operation.

When the carrier 12 rotates in accordance with the rotation of the main shaft 41, the three planetary rollers 33 rotate about their own axes while revolving about the sun roller 31. The torque is transmitted from the planetary rollers 33 to the sun roller 31 through an oil film formed therebetween. In this way the high speed spindle 25 rotates in accordance with the rotation of the sun roller 31, thereby enabling the tool (not shown) held by the tool holder 30 to rotate.

As the rotational speed of the spindle 25 increases, the fixed ring 2 is subjected to frictional heat but the coolant in the passageways 36 and 37 prevents undue temperature rises. The fixed ring 2 is thus protected against expansion or elongation due to heat, which otherwise would restrict the allowance for tightening the planetary rollers 33.

## Claims

1.  A speed-up spindle unit for connection to a machine tool and comprising:

    a cylindrical housing (1) having means (11, 22) to prevent the housing (1) from rotating relative to a machine driving the tool;

    a cylindrical carrier (12) having a central bore (26) extending in the axial direction from a forward end toward a rear end and connected to an input shaft (17) at its rear end;

    a fixed ring (2) fixed by an interference fit on the inner peripheral surface of the cylindrical housing (1) so that the fixed ring (2) is subject to a concentrical contraction and is positioned coaxially with the cylindrical carrier (12);

    a high-speed spindle (25) connected to a tool holder (30) at its forward end and to a sun roller (31) at its rearward end;

    a plurality of radial passageways (32) arranged circumferentially in the carrier so that they communicate with the central bore (26);

    planetary rollers (33) rotatably carried in respective ones of the radial passageways (32) in such a manner as each maintains contact with the fixed ring (2) at one peripheral portion and with the sun roller (31) at the opposite peripheral portion so that the planetary rollers (33) individually rotate about their own axes while they revolve about the sun roller (31), thereby constituting a traction drive mechanism whereby an increased speed output is obtained from the sun roller (31) in response to an input to the carrier (12); and

    a cooling jacket passageway (36, 37) disposed in the housing to remove from the fixed ring (2) heat generated by friction.

2.  A speed-up spindle unit according to claim 1, wherein the cooling jacket passageway (36, 37) is connected to an outlet port (39) which is open toward the tool holder (30) so that discharged coolant can cool and lubricate a working tool.

3.  A speed-up spindle unit according to claim 1 or claim 2, wherein a plurality of cooling jacket passageways (36, 37) are provided in annular form.

4.  A speed-up spindle unit according to any one of claims 1 to 3, wherein the fixed ring (2) is provided with an annular groove (3) on its inner peripheral surface to store lubricant.

## Patentansprüche

1.  Spindeleinheit für Drehzahlerhöhung für den Anschluß an eine Werkzeugmaschine, wobei die Einheit aufweist:

    ein zylindrisches Gehäuse (1), welches eine Einrichtung (11, 22) hat, um zu verhindern, daß das Gehäuse (1) relativ zu einer Maschine rotiert, welche das Werkzeug antreibt,

    einen zylindrischen Träger (12), der eine zentrale Bohrung (26) hat, die sich in axialer Richtung von einem vorderen zu einem hinteren Ende erstreckt und welcher an seinem hinteren Ende mit einer Eingangswelle (17) verbunden ist,

    einen festen Ring (2), der durch Preßpassung an der inneren Umfangsobefläche des zylindrischen Gehäuses (1) befestigt ist, so daß der feste Ring (2) einer konzentrischen Kontraktion ausgesetzt ist und koaxial zu dem zylindrischen Träger (12) angeordnet ist,

    eine Hochgeschwindigkeitsspindel (25), welche mit einem Werkzeughalter (30) an ihrem vorderen Ende und mit einem Sonnenrad (31) an ihrem hinteren Ende verbunden ist,

    eine Mehrzahl von radialen Durchgängen (32), die in Umfangsrichtung in dem Träger angeordnet sind, so daß sie mit der zentralen Bohrung (26) in Verbindung stehen,

    Planetenräder (33), welche drehbar in den jeweiligen radialen Durchgängen (32) derart gehaltert sind, daß jedes den Kontakt mit dem festen Ring (2) an einem Umfangsabschnitt und mit dem Sonnenrad (31) an dem gegenüberliegenden Umfangsabschnitt aufrechterhält, so daß die Planetenräder (33) individuell um ihre eigenen Achsen rotieren, während sie um das Sonnenrad (31) umlaufen, so daß sie einen Zugantriebmechanismus darstellen, wodurch eine gesteigerte Drehzahlausgabe von dem Sonnenrad (31) unter Ansprechen auf eine Drehzahleingabe auf den Träger (12) erhalten wird, und

einen Kühlmanteldurchgang (36, 37), welcher in dem Gehäuse angeordnet ist, um von dem festen Ring (2) durch Reibung erzeugte Wärme abzuführen.

2. Spindeleinheit für Drehzahlerhöhung nach Anspruch 1, wobei der Kühlmanteldurchgang (36, 37) mit einem Auslaßanschluß (39) verbunden ist, der in Richtung des Werkzeughalters (30) offen ist, so daß das abgegebene Kühlmittel ein Arbeitswerkzeug kühlen und schmieren kann.

3. Spindeleinheit für Drehzahlerhöhung nach Anspruch 1 oder 2, wobei eine Mehrzahl von Kühlmanteldurchgängen (36, 37) in ringförmiger Form vorgesehen sind.

4. Spindeleinheit für Drehzahlerhöhung nach einem der Ansprüche 1 bis 3, wobei der feste Ring (2) mit einer ringförmigen Nut (3) an seiner inneren Umfangsoberfläche versehen ist, um Schmiermittel zu speichern.

**Revendications**

1. Broche multiplicatrice pour connexion à une machine-outil et comprenant :

un boîtier cylindrique (1) comportant un moyen (11, 22) pour empêcher le boîtier (1) de tourner relativement à une machine entraînant l'outil;

un support cylindrique (12) comportant un alésage central (26) s'étendant dans la direction axiale d'une extrémité avant vers une extrémité arrière et relie à un arbre d'entrée (17) à son extrémité arrière;

un anneau fixe (2) fixe par un ajustement serre sur la surface périphérique interne du boîtier cylindrique (1) de manière que l'anneau fixe (2) soit soumis à un contraction concentrique et soit positionne dans le même axe que le support cylindrique (12);

une broche à grande vitesse (25) reliée à un porte-outil (30) à son extrémité avant et à un rouleau solaire (31) à son extrémité arrière;

une pluralité de passages radiaux (32) disposes à la circonférence du support de manière à communiquer avec l'alésage central (26);

des rouleaux planétaires (33) supportes à rotation dans des passages radiaux (32) respectifs de manière que chacun d'eux garde un contact avec l'anneau fixe (2) à une portion périphérique et avec le rouleau solaire (31) à la portion périphérique opposée afin que les rouleaux planétaires (33) tournent individuellement sur leur axe propre tandis qu'ils tournent selon le rouleau solaire (31), afin de constituer un mécanisme d'entraînement par traction de manière qu'une sortie à plus grande vitesse soit obtenue depuis le rouleau solaire (31) en réponse à une entrée au support (12); et

un passage à chemise de refroidissement (36, 37) dispose dans le boîtier pour enlever de l'anneau fixe (2) la chaleur produite par le frottement.

2. Broche multiplicatrice selon la revendication 1, dans laquelle le passage à chemise de refroidissement (36, 37) est relie à un orifice de sortie (39) qui est ouvert vers le porte-outil (30) de manière que le réfrigérant déchargé puisse refroidir et lubrifier un outil de travail.

3. Broche multiplicatrice selon la revendication 1 ou 2, dans laquelle une pluralité de passages à chemise de refroidissement (36, 37) ont une forme annulaire.

4. Broche multiplicatrice selon l'une quelconque des revendications 1 à 3, dans laquelle l'anneau fixe (2) est dote d'une rainure annulaire (3) sur sa surface périphérique interne pour stocker un lubrifiant.

FIG.1

FIG.2